(19) Europäisches Patentamt

European Patent Office

Office européen des brevets

(11) **EP 1 637 878 A1**

(12) **EUROPEAN PATENT APPLICATION**

(43) Date of publication:
22.03.2006 Bulletin 2006/12

(51) Int Cl.:
*G01N 30/84* (2006.01)     *H01J 49/04* (2006.01)
*G01N 30/72* (2006.01)

(21) Application number: 05026613.9

(22) Date of filing: 23.12.1996

(84) Designated Contracting States:
**AT BE CH DE DK ES FI FR GB GR IE IT LI LU MC NL PT SE**
Designated Extension States:
**AL LT LV RO SI**

(30) Priority: 23.12.1995 GB 9526508
26.07.1996 GB 9615803

(62) Document number(s) of the earlier application(s) in accordance with Art. 76 EPC:
**96945559.1 / 1 007 959**

(71) Applicant: **The Queens University of Belfast**
**Belfast BT7 1NN (GB)**

(72) Inventor: **Meier-Augenstein, Wolfram**
**Comber**
**County Down**
**BT23 5NE (GB)**

(74) Representative: **Drysdale, Douglas Standen et al**
**Murgitroyd & Company**
**Scotland House**
**165-169 Scotland Street**
**Glasgow G5 8PL (GB)**

Remarks:
This application was filed on 06 - 12 - 2005 as a divisional application to the application mentioned under INID code 62.

(54) **Gas inlet system**

(57)     A method and apparatus for introducing a reference gas into isotope mass spectrometer systems. The reference gas is introduced into the system before a combustion interface and yields Gaussian shaped peaks of the same form as those produced for sample constituents. In one embodiment of the present invention the gas inlet comprises three pipes which intersect at an intersection point wherein a reference gas and a secondary flow of a carrier gas can enter the inlet via separate pipes and can exit via third pipe before the secondary flow enters the combustion interface.

FIG. 1

**Description**

The present invention relates to a gas inlet system which has been designed to introduce reference gases of any type, inert or combustible, into isotope ratio mass spectrometer systems.

In particular, the system permits the introduction of a reference gas in such a way that this gas is subjected to the same physical conditions as the analytes thus meeting the conditions of an internal standard. Hence, it combines the advantages of a reference compound added into a sample with the advantage of allowing the positioning of reference gas pulses as desired within a given chromatogram.

The commercial availability of gas isotope ratio mass spectrometers (GIRMS) directly coupled to a gas-chromatography (GC) via an on-line combustion interface (C), based on the design by Matthews and Hayes [1], GC-C-IRMS has become a powerful tool in all areas of applied analytical chemistry [2,3].

Whatever the specific application, the user is confronted with the dilemma of how to refer measured stable isotope ratios of the analytes to a calibrated isotope standard. The best results are obtained when an internal standard compound of known isotopic composition is added to the sample mixture [4]. The major advantage is that standard and analytes are subjected to identical physical conditions during analysis. However, this advantage may be lost in cases in which the standard or analytes elute late in the chromatogram where increasing peak distortion negatively influences accuracy and precision of measured isotope ratios. Adding an internal standard mixture representative of the whole range of analytes, on the other hand, is of little help since it will create problems caused by co-elution or at least overlap of analytes and individual compounds of the internal standard mixture.

It is standard practice to introduce pulses of an isotopically calibrated gas, such as $CO_2$ from a gas cylinder via an independent second capillary directly into the ion source of the IRMS [3,5,6]. Although it is commonly accepted that this mode of calibration does not take account of the physical conditions to which analytes are subjected, because of its user-friendliness and practicability its use is common. Recent observations of isotopic fractionation occurring during gas-liquid chromatography (GLC) followed by on-line combustion have been reported [7].

The present invention aims to optimise isotopic calibration and provide an approach that maintains the free positioning of reference peaks while at the same time subjecting the reference compound to the same physical conditions as the analytes.

It is an object of the present invention to provide an improved method and apparatus for introducing a reference gas in isotope ratio mass spectrometer systems.

Accordingly the present invention provides a reference gas inlet for use in isotope mass spectrometer system comprising three pipes which intersect at an intersection point, wherein flow of carrier gas and reference gas can enter the inlet via separate pipes for use in isotope ratio mass spectrometer systems which controllably introduces the reference gas at a point before the interface and yields a Gaussian shaped peak of the same form as that produced by the sample constituents.

Therefore in IRMS systems fitted with a combustion interface, combustible gases can be used as a reference gas.

Preferably the inlet comprises three pipes which intersect at an intersection point, wherein a secondary flow of carrier gas and reference gas can enter the inlet via separate pipes and can exit the inlet together via the third pipe at a point before the flow enters the combustion interface.

The reference gas can be introduced into a flow of carrier gas (e.g. Helium) that joins or is equal to the primary flow of carrier gas transporting a sample containing the elemental analyte at a point before both flows pass into a module that converts the sample into a gaseous form for mass spectrometric analysis.

Preferably the reference gas inlet comprises a hollow T piece, two ends of which are positioned in the secondary carrier gas line wherein reference gas can be carried into the system thus entering the interface.

Most preferably the reference gas inlet pipe can be switched on and off such that the reference gas can be controllably introduced.

In one particular embodiment the reference gas inlet pipe comprises a sheathing pipe and an inner pipe moveable within the sheathing pipe towards and away from the intersection of the inlet.

The invention will now be further described without limitation with reference to the accompanying drawings wherein:

Fig. 1 Illustrates a gas chromatography on-line combustion interface isotope ratio mass spectrometry system.

Fig. 2 Illustrates the position of a reference gas inlet module in a gas chromatography on-line combustion interface isotope ratio mass spectrometry system.

Fig. 3A Schematic of the T-piece connecting the second carrier gas stream and the GC effluent to the combustion furnace.

Fig. 3B Schematic of the reference gas inlet scheme using a moveable capillary.

Fig. 4 Illustrates an arrangement whereby the reference gas may be introduced by means of a moveable piston arrangement.

Fig. 5 Illustrates the combination of two reference gas inlet modules.

Fig. 6 Ion current of m/z of $CO_2$ pulses introduced into the combustion furnace via REGIS (numbers over each peak indicate pulse width time).

Fig. 7A Effect of GC parameter and choice of reference peak - methylcaproate ($C_6$) was chosen as internal as internal standard and its $\delta^{13}C$-value was arbitrarily set to 0.000‰.

Fig. 7B Effect of GC parameter and choice of reference peak - $CO_2$ was chosen as an internal standard and its $\delta^{13}C$-value was arbitrarily set to - 11.84 to match the $\delta^{13}C$-value chosen for $C_6$. The set point was based upon the FAME analyses carried out at 4°C/min.

Fig. 8A Effect of GC parameter and choice of reference peak - methylundecanoate ($C_{11}$) was chosen as internal standard and its $\delta^{13}C$-values was arbitrarily set to 0.000‰.

Fig. 8B Effect of GC parameter and choice of reference peak - $CO_2$ was chosen as internal standard and its $\delta^{13}C$-value was set to -10.675‰ to match the $\delta^{13}C$-value of 0.000‰ chosen for $C_{11}$. This set point was based on the FAME analyses carried out at 8°C/min.

Fig. 9 Ion current chromatogram of m/z 44 of $CO_2$ pulses (R) and n-O-propyl, N-trifluoroacetyl derivatives of 5 amino acids (S) recorded using an ORCHID system fitted with a REGIS module.

Fig. 10 Ion current chromatogram of m/z 28 of $N_2$ pulses (R) and n-O-propyl, N-trifluoroacetyl derivatives of 5 amino acids (S) recorded using an ORCHID system fitted with a REGIS module.

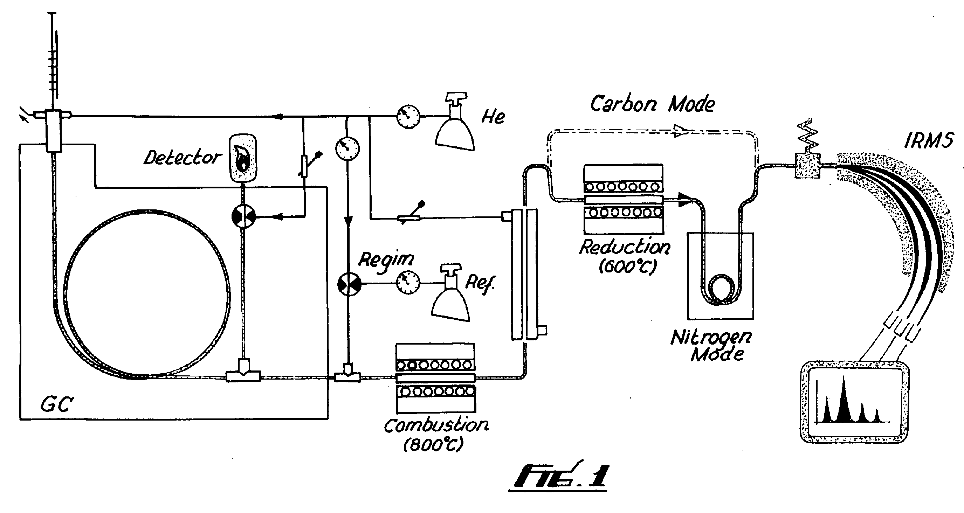

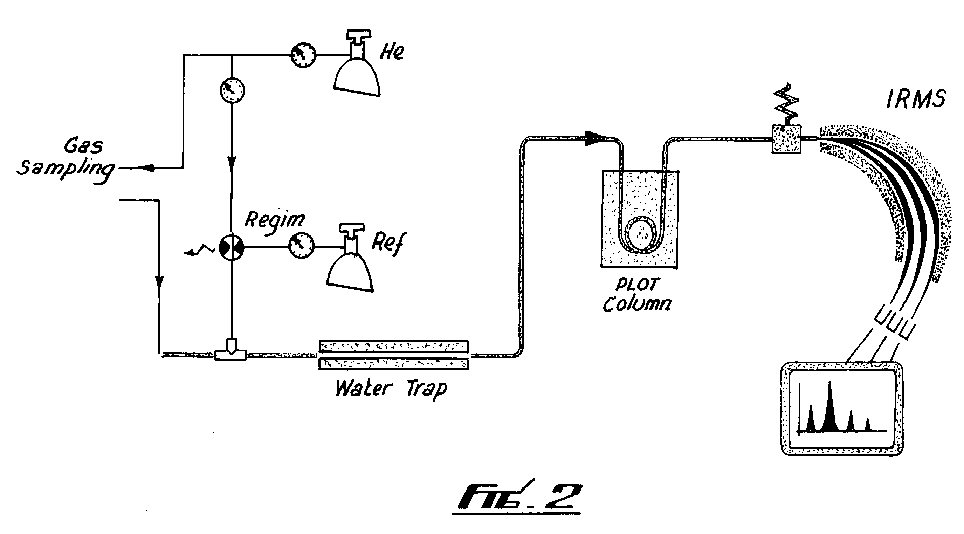

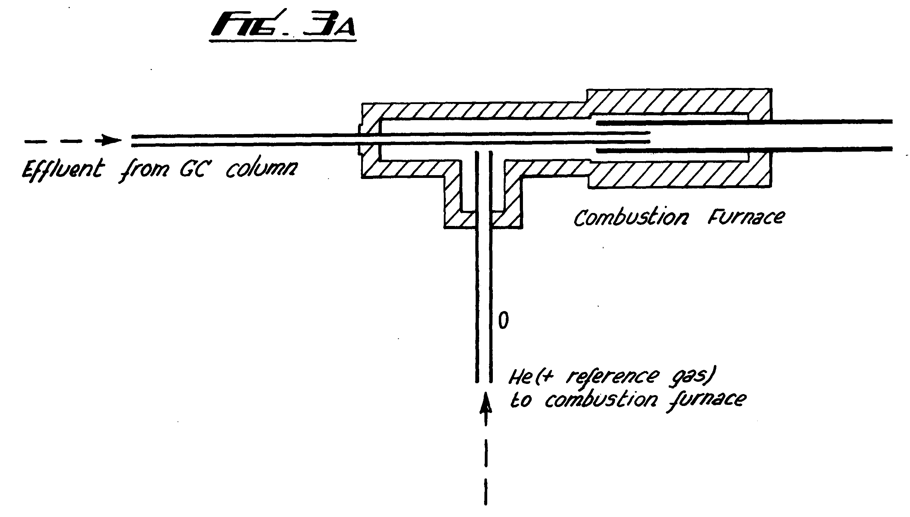

The primary flow of carrier gas transporting the gas-chromatographically separated sample constituents and the secondary flow of carrier gas (which, as appropriate, transports the reference gas) both enter the combustion interface i.e. at the bottom of the oxidation furnace (Fig. 3A). The secondary flow of carrier gas continuously enters the combustion interface at a given gas pressure and flow rate.

A low dead volume T-piece situated in the second carrier gas line accommodates three pipes, an inlet pipe I, an outlet pipe O, and a sheathing pipe S (Fig. 3B). The second carrier gas enters the T-piece via pipe I and leaves it via pipe O. The sheathing pipe S opposite pipe O houses another pipe (pipe R) through which the reference gas can flow.

In "switch-off" position A, the end of pipe R lies before the intersection of the T-piece. Gas pressure and flow rates of the second carrier gas and of the reference gas are pre-set in such a way that reference gas flowing out of pipe R is forced by the second carrier gas to leave the system through pipe S. In "switch-on" position B, pipe R is moved forwards by means of a suitable remote controllable device (e.g. pull/thrust action miniature solenoid) in such a way that pipe R now lies in the intersection of the T-piece. Reference gas flowing from pipe R is thereby carried with by the second carrier gas flow, passing through the combustion interface and eventually entering the IRMS.

The described method and apparatus allow analytes in the primary gas flow to be measured against an internal reference gas.

Owing to the layout described above, the reference gas is subject to all the same processes in the combustion interface so that any influences of these on the measurement characteristics affect both the standards and the analytes. Both the analyte peak and the reference gas peak are of Gaussian shapes. Peak detection and integration parameters are common for both the analyte gas peak and the reference gas peak which increases accuracy and precision.

At a given reference gas pressure, peak height and peak area can be changed by setting the period of the switch-on time accordingly. For a fixed period of switch-on time, peak height and peak area can be changed by setting the reference gas pressure appropriately. Since there is always a constant flow of reference gas emanating from pipe R, no pressure shock-waves are created and the reference gas is always equilibrated with the primary gas flow.

Additionally, as there is always a certain amount of second carrier gas emanating from pipe S, no incoming leak is created, i.e. no atmospheric gases can enter the system. This is particularly important for analysis of nitrogen containing compounds.

Two principles guided the new approach: 1) the desire to combine the advantage of adding an internal standard to the sample at will anywhere in a given chromatogram without interfering with the gas-chromatographic separation;

2) recent observations of isotopic fractionation of saturated FAMEs during GLC-C-IRMS that prompted the hypotheses of the combustion interface being a major contributing factor to this thermodynamic isotope effect [7] .

Since gases of low molecular weight and high volatility such as $CO_2$, $N_2$, $CH_4$ etc are hardly if at all retained by common GLC stationary phases, i.e. are not subject to solute-stationary phase interaction, any design aiming to introduce such gases at injector or column head level could be ruled out from the start. The obvious place to position a gas inlet was between column end and combustion furnace.

To do this, a second continuous helium stream was introduced into the combustion interface via a low deal volume T-piece positioned between column end and combustion furnace (Fig. 3A). This T-piece was connected to the combustion furnace in such a way that its temperature was well above 360°C thus preventing condensation of analytes due to cold spots.

A remote switchable device was positioned in the capillary carrying the second helium stream. This device was designed in such a way that the reference gas was always flowing and thus equilibrated with ambient pressure and, hence, not subject to isotopic fractionation. When switched on, the reference gas was introduced pressure pulse free into the second helium stream (Fig. 3B). The flow rate of the reference gas could be freely adjusted but was typically set to <0.3ml/min.

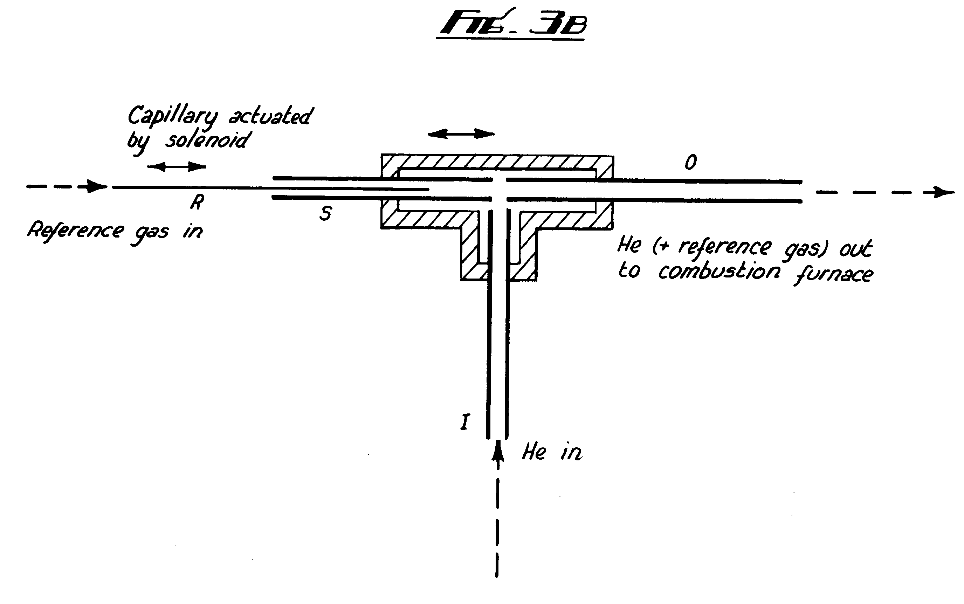

In an alternative embodiment of the present invention the reference gas inlet system is of a T-shaped configuration which incorporates a piston arrangement as shown in Fig. 4. The piston arrangement must be in an 'open' mode (as shown in Fig. 4) for a reference gas to flow into the gas isotope analysis system. To prevent a reference gas from entering the analysis system, the piston arrangement must be in a 'closed' mode wherein the piston cooperates with the valve seat such that the reference gas is vented to the atmosphere via a restriction outlet.

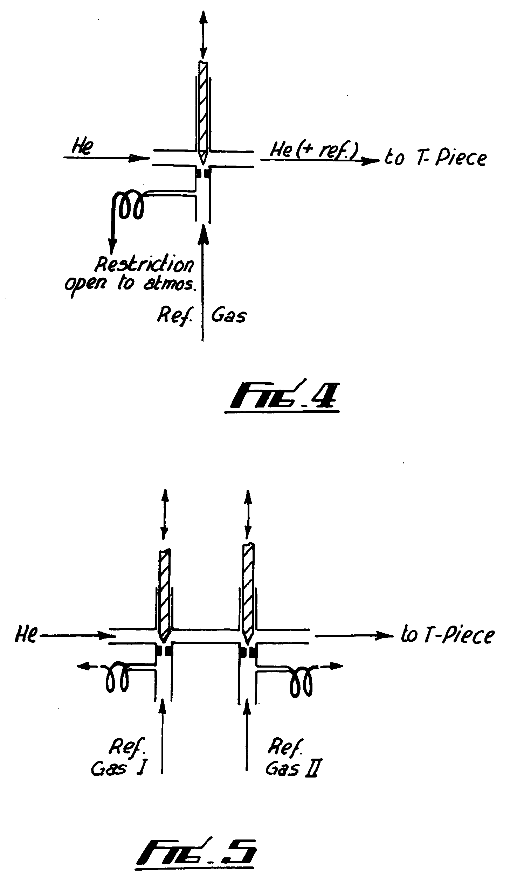

Figure 5 illustrates one way in which two of the T-shaped gas inlet systems can be linked to allow more than one reference gas to be used.

Since any gas serving as a reference was introduced into the combustion interface in front of the combustion furnace, it is possible to use a combustible gas as reference compound. Any such gas would be subject to the physical conditions of both the combustion process and the interface.

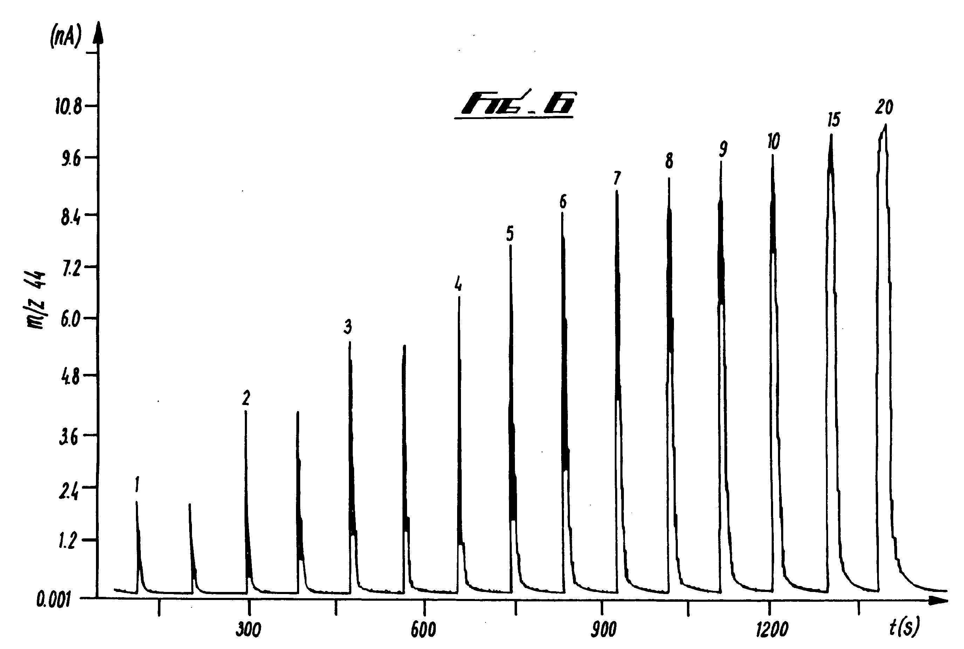

Introducing reference gas pulses via this module resulted in virtually Gaussian shaped peaks that could hardly be distinguished from peaks caused by combusted analytes. Peak area of the reference gas was linear dependent on pulse width time from 1 to 10 s (Table 1). Pulse width longer than 15 s, i.e. pulse width times of the same order as peak width, resulted in almost rectangular peak shapes (Fig. 6).

First tests with the Reference Gas Inlet System for Internal Standardisation (REGIS) were carried out using $CO_2$ as reference gas. Because only relative changes were to be monitored its $\delta^{13}C$-value was arbitrarily set to zero. During all tests the column head pressure of the second helium stream, and the $CO_2$ pressure were kept constant.

All relative $\delta^{13}C$-values in ‰ are given as mean of three repetitions and the error bars are $\pm2\sigma$. Identical aliquots of a FAME mixture were injected in splitless mode. The split was kept closed for 6 seconds and opened thereafter for the rest of the run. The split flow was set to 30 ml/min. Column temperature was held at 70°C for 5 minutes and then programmed to 270°C at n°C/min, where n = 4, 6 or 8. Column head pressure was set to flow rate of 1.20 ml/min corresponding to a linear velocity of 28.4 ml/min at a column temperature of 70°C.

The results of these experiments are presented in Table 2. Under isothermal conditions excellent precision was observed, independent of whether the GC effluent was diverted from or directed into the combustion interface. The average $\delta^{13}C$-value of -0.013 $\pm$ 0.048 ‰ (95% confidence limit based on ten degrees of freedom) obtained from these isothermal runs served as the target value for subsequent studies when temperature gradients were run on the GC in constant pressure mode.

Selecting only a single active reference peak, a noticeable shift towards more negative $\delta^{13}C$-values was observed with steeper temperature gradients (Table 2). Here, average $\delta^{13}C$-values were -0.063 $\pm$ 0.103 ‰ (95% confidence limit based on ten degrees of freedom) obtained from these isothermal run served as a target value for subsequent studies when temperature gradients were run on the GC in constant pressure mode.

Selecting only a single active reference peak, a noticeable shift towards more negative $\delta^{13}C$-values was observed with steeper temperature gradients (Table 2). Here, average $\delta^{13}C$-values were -0.063 $\pm$ 0.087$^{\circ}/_{00}$, and -0.166 $\pm$ 0.103 ‰, and -0.417 $\pm$ 0.193 ‰ for 4°C/min, 6°C/min, and 8°C/min, respectively. Clearly, these shifts were attributable to the change, i.e. decrease, in carrier gas flow caused by the rise in column temperature since these were the only dependent variables. By selecting three active reference peaks, however, average $\delta^{13}C$-values became virtually identical with the target value obtained under isothermal conditions.

Similar observations were made when the combustible gas isobutane (10 vol% in He) was used. In contrast to $CO_2$, for which precision was usually better than 0.1‰, the additional combustion process was reflected in a precision of about 0.2‰, only (Table 3). When selecting three active reference peaks, average $\delta^{13}C$-values obtained from temperature gradient analyses became identical with the calculated target value of +0.007 $\pm$ 0.156‰ (95% confidence limit based on ten degrees of freedom).

Although the observed precision of $\pm$0.156‰ was very similar to that of $\pm$0.11‰ reported by S A Baileys et al. [8] it was likely that by using CuO/Pt at 820°C for combustion, complete combustion of isobutane could not be achieved. For complete combustion of natural gases such as methane, propane and isobutane, higher temperatures, i.e. ~1000°C, are reported to be more suitable [9]. The furnace used in this study was unable to deliver such high temperatures.

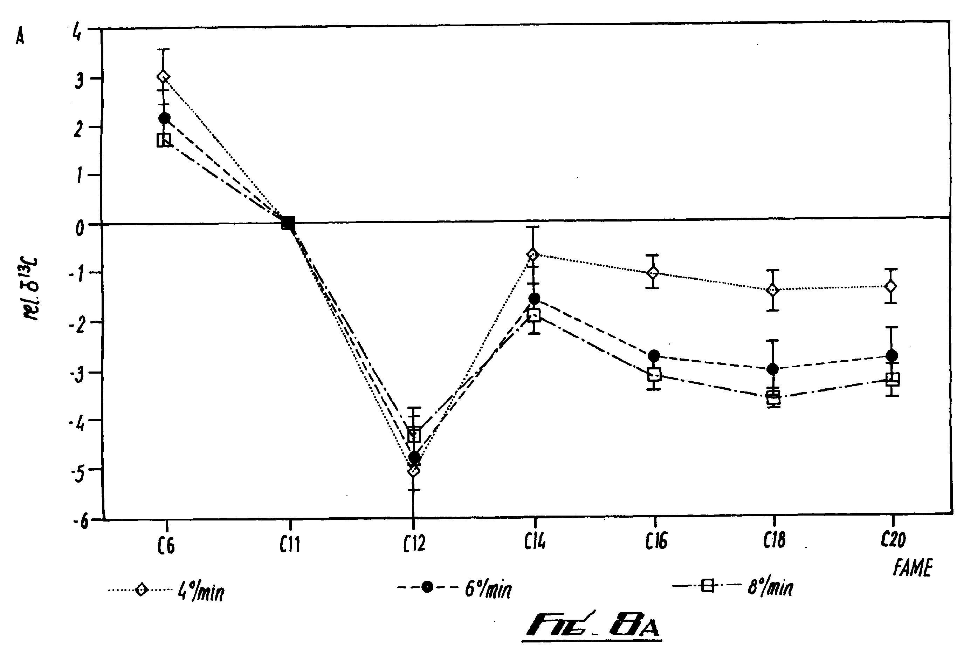

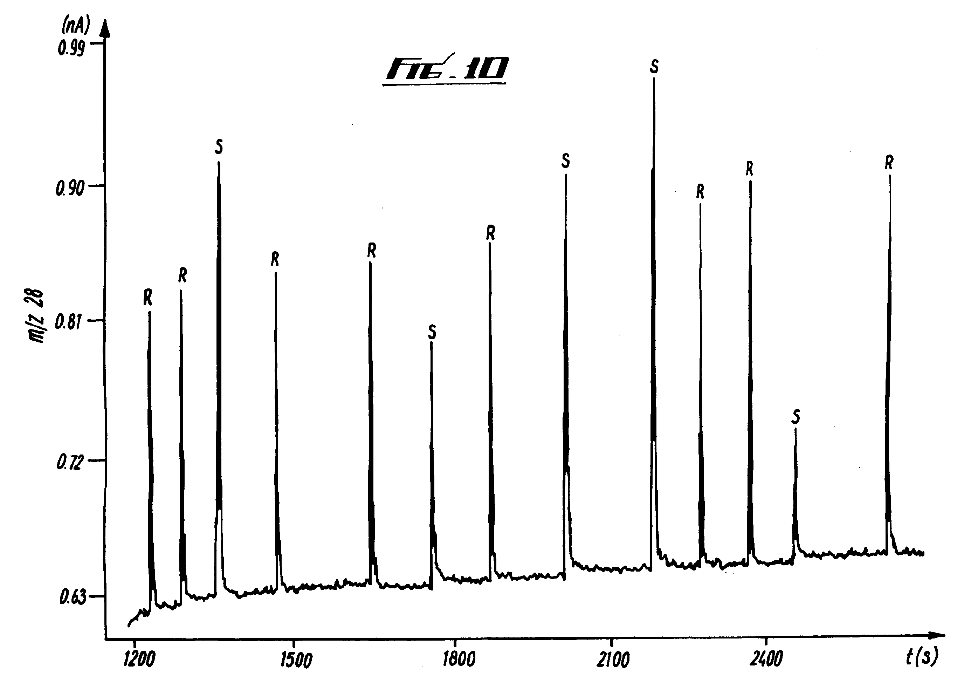

First experiments with a FAME mixture and $CO_2$ as reference compound clearly showed the merits of this alternative way of standardisation. As reported previously [7], a significant difference in $\delta^{13}$C-values of > +2.00‰ on average was observed when comparing $\delta^{13}$C-values obtained at 4°C/min with those obtained at 8°C/min and when only one analyte was chosen as internal reference compound (Fig. 8A). It must be emphasized that these differences could only be detected because no time shift correction [3, 10, 11] was employed by the data evaluation software.

Evaluating data based on 95% confidence limits (two degrees of freedom) as well as within $\pm$ 2σ, $\delta^{13}$C-values for $C_6$, $C_{11}$, $C_{12}$, $C_{14}$, $C_{16}$, $C_{18}$, and $C_{20}$ became virtually identical when four $CO_2$ pulses introduced via the REGIS were chosen as internal reference peaks (Fig. 7B and 8B).

This method of internal isotopic calibration cannot account for those isotope effects which occur in the GC column due to different solute-stationary phase interaction dominated by Van der Waals dispersion forces, leading to an earlier elution of the heavier isotope [12]. This is clearly reflected in the fact that only a 95% agreement between $\delta^{13}$C-values measured with different temperature gradients could be achieved when expressing FAME $\delta^{13}$C-values versus $CO_2$ after its isotope ratio has been calibrated against $C_{11}$ with $\delta^{13}$C $C_{11}$ = 0.000‰ (Fig. 8B) . It may therefore be argued that this method is not a true internal calibration. But, as pointed out earlier, permanent gases are not subject to solute-stationary phase interaction on stationary phases used in GLC. For the time being, this method of isotopic calibration constitutes the best possible compromise of the two existing methods.

The finding of an agreement of as high a value as 95% supports the hypothesis that the combustion interface, because of its numerous connections and changes in capillary diameter between the GC and the IRMS, contributes significantly to the process of peak shapes becoming asymmetric and, hence, amplifying the chromatographic isotope effect in GLC [13, 7] .

With the inlet pipe of the invention reference gas is introduced in a continuously flowing second stream of carrier gas before the interface and, hence, subject to same influences by this interface as the analyte(s) therefore acting as an internal standard. The design of the REGIM ensures no interference of the reference gas with the analyte. The principal design of the REGIM module allows for any conceivable combination of modules and therefore provides the means of introducing e.g. two reference gases or one reference gas and an oxidation agent for use with a combustion interface ($O_2$ alternatively and/or simultaneously). Owing to the principal design of the REGIM, flow and pressure of the reference gas(s) are always equilibrated and are, therefore, not subject to isotope fractionation by the switching process. Flow and pressure of the reference gas(es) are set up in such a way that no pressure pulses are created by the switching process. Reference gas introduced into the system results in a signal as the same appearance as an analyte signal and is processed in the same way as such.

The reference gas inlet system presented of this invention is suggested as a valuable alternative to existing methods of isotopic calibration. It yields measurements of excellent precision and significantly improves accuracy when multiple active reference peaks are selected. Furthermore, it combines the user-friendliness and practicability of the existing method of external calibration with the advantage of standard and analytes being subject to identical physical conditions during passage through the combustion interface.

This system is especially useful when data are processed without time shift correction as reference compounds thus introduced pick up thermodynamic isotope effects. Because of this property it can be justifiably termed reference gas inlet system for internal isotopic calibration.

Studies were carried out on an ORCHID GC-C-IRMS system (Europa Scientific, Crewe, CW1 1ZA, UK). The combustion interface, comprising a CuO/Pt combustion furnace operated at 820°C, a Nafion tube acting as water separator, and a Cu reduction furnace operated at 600°C transformed sample peaks eluted from the GC into dry $CO_2$ and $N_2$. In $^{13}$C-studies, measured isotope ratios are automatically corrected for contributions from $^{17}$O[14] and expressed as δ-values in per mille [‰] units:

$$\delta^{13}C = (R_{sample} - R_{standard}) / R_{standard} \ \text{x} \ 1000 \qquad\qquad \text{Eqn. 1}$$

where $R$sample is the $^{13}$C/$^{12}$C of the sample and $R$standard is the $^{13}$C/$^{12}$C ratio of the working standard. Since this study was only concerned with changes rather than absolute values, in all experiments one or more peaks were chosen as internal reference peaks and their $\delta^{13}$C-values were arbitrarily set to zero.

The gas chromatograph was an HP 5890, Series II, fitted with an electronic pressure control (EPC) thus permitting the carrier gas management to be set either to constant pressure or to constant flow mode.

Helium of 5.0 purity was used as carrier gas and was passed through a high capacity gas purifier (Supelco UK, Poole, BH17 7TG, UK) before entering the GC. Column head pressure was controlled by an EPC. In either mode, carrier gas was set to a linear velocity of 28.4 cm/s at a column temperature of 70°C. Experiments using $CO_2$ and isobutane were carried out either at a constant GC temperature of 70°C or using one of three temperature gradients wherein the GC temperature was held at 70°C for 2 minutes and subsequently programmed to 270°C at rates of 4°C/min, 6°C/min, and 8°C/min, respectively.

Separation of saturated FAMEs was achieved on a CP-Sil 19 CB capillary column (Chrompack, Middelburg, NL), dimensions 25m x 0.25mm, 1.2 $\mu$m film thickness.

The column was connected to a retention gap, 1m x 0.25mm, that was cyanopropyl/phenyl/methyl deactivated [15].

Data were analysed using the manufacturer provided software (Europa Scientific ORCHID POST-PROCESSOR).

**Table 1** Dependence of peak area and peak height on pulse width of $CO_2$ pulses.[a]

| Pulse Width [s] pw | Peak Area [nA s] pa[b] | Peak Height [nA] ph[c] | Peak Width [s] at baseline | rel.$\delta^{13}$C[‰][d] |
|---|---|---|---|---|
| 1 | 7.87 | 1.82 | 22 | -0.100 |
| 2 | 16.45 | 3.69 | 25 | -0.010 |
| 3 | 25.26 | 5.10 | 27 | 0.181 |
| 4 | 34.18 | 6.02 | 28 | 0.103 |
| 5 | 44.10 | 7.07 | 30 | 0.00* |
| 6 | 54.00 | 7.77 | 31 | -0.091 |
| 7 | 63.90 | 8.25 | 32 | -0.083 |
| 8 | 72.78 | 8.47 | 33 | 0.071 |
| 9 | 83.09 | 8.76 | 34 | 0.250 |
| 10 | 93.15 | 8.96 | 35 | -0.112 |

[a] The $CO_2$ pulses were introduced under isothermal conditions (70°C) while the GC eftluent was connected to the combustion interface.

[b] Regression analysis yielded: pa=9.49pw - 2.61; r=0.99971; $r^2$=0.99942.

[c] Regression analysis yielded: ph =-0.279 + 2.335pw - 0.206pw$^2$ + 0.006pw$^3$; r=0.99956; $r^2$=0.99913.

[d] The $CO_2$ pulse with 5 s pulse width was chosen as active reference peak and is marked with an asterisk. Mean value is 0.023 ‰, median is -0.01 ‰ and S.D. is 0.126.

**Table 2**

Dependence of relative $\delta^{13}C$-values [%] of $CO_2$ pulses of 2 s pulse width on gas-chromatographic parameters. [a]

| $I_{puls}$[s] | isothermal diverted[b] 1 active ref.peak* | isothermal connected[c] 1 active ref.peak* | 4°/min[c] 1 active ref.peak* | 4°/min[c] 3 active ref.peaks* | 6°/min[c] 1 active ref.peak* | 6°/min[c] 3 active ref.peaks* | 8°/min[c] 1 active ref.peak* | 8°/min[c] 3 active ref.peaks* |
|---|---|---|---|---|---|---|---|---|
| 180 | -0.031 | +0.073 | +0.068 | +0.035 | -0.072 | -0.010 | -0.168 | -0.280 |
| 270 | 0.000* | 0.000* | 0.000* | 0.000* | 0.000* | 0.000* | 0.000* | 0.000* |
| 360 | -0.027 | +0.048 | +0.036 | +0.013 | -0.124 | -0.034 | -0.183 | -0.065 |
| 630 | +0.026 | +0.002 | -0.067 | 0.000* | -0.153 | 0.000* | -0.356 | 0.000* |
| 720 | +0.002 | -0.045 | -0.107 | +0.067 | -0.179 | -0.027 | -0.432 | -0.071 |
| 1080 | +0.051 | -0.036 | -0.133 | 0.000* | -0.202 | 0.000* | -0.520 | 0.000* |
| 1170 | -0.046 | -0.005 | -0.269 | -0.123 | -0.288 | +0.080 | -0.671 | +0.056 |
| mean±σ[d] | -0.017±0.048 | -0.009±0.048 | -0.063±0.087 | +0.011±0.075 | -0.166±0.103 | -0.062±0.076 | -0.417±0.193 | -0.094±0.228 |

[a] GC was run under a constant column head pressure corresponding to a flow rate of 1.2 ml/min and a linear velocity of 28.4 cm/s at a column temperature of 70°C. Column temperature was held at 70°C for isothermal runs, or held for 2 minutes and then programmed to 270°C at n°/min. In total, 15 gas pulses of 2 s width each were introduced in 90 s intervals. Note that only 7 out of 15 pulses are shown.

[b] GC effluent was diverted to the FID.

[c] GC effluent was connected to the combustion interface after 2 minutes.

[d] Average $\delta^{13}C$-values in [%] ± σ are given as mean of (15-1) values in the case of 1 active reference peak, or of (15-3) values in the case of 3 active reference peaks.

Table 3

Dependence of relative $\delta^{13}$C-values [‰] of isobutane pulses of 2 s pulse width on gas-chromatographic parameters.[a]

| t_pulse [s] | isothermal connected[b] 1 active ref.peak* | isothermal connected[b] 1 active ref.peak* | 4°/min[b] 1 active ref.peak* | 4°/min[b] 3 active ref.peaks* | 6°/min[b] 1 active ref.peak* | 6°/min[b] 3 active ref.peaks* | 8°/min[b] 1 active ref.peak* | 8°/min[b] 3 active ref.peaks* |
|---|---|---|---|---|---|---|---|---|
| 180 | -0.323 | +0.232 | +0.186 | +0.097 | -0.043 | -0.132 | +0.161 | -0.089 |
| 270 | 0.000* | 0.000* | 0.000* | 0.000* | 0.000* | 0.000* | 0.000* | 0.000* |
| 360 | +0.277 | -0.150 | -0.061 | +0.164 | -0.081 | +0.266 | -0.143 | +0.067 |
| 630 | -0.232 | +0.024 | -0.094 | 0.000* | -0.287 | 0.000* | -0.237 | 0.000* |
| 720 | -0.165 | -0.023 | -0.290 | -0.195 | -0.309 | +0.006 | -0.284 | +0.039 |
| 1080 | +0.165 | -0.090 | -0.249 | 0.000* | -0.361 | 0.000* | -0.175 | 0.000* |
| 1170 | -0.291 | +0.169 | +0.031 | +0.151 | -0.373 | -0.005 | -0.057 | +0.049 |
| mean ± σ[c] | -0.102±0.155 | +0.116±0.158 | -0.113±0.188 | +0.034±0.189 | -0.268±0.119 | +0.040±0.111 | -0.125±0.201 | -0.003±0.144 |

a) GC was run under a constant column head pressure, corresponding to a flow rate of 1.2 ml/min and a linear velocity of 28.4 cm/s at a column temperature of 70°C. Column temperature was held at 70°C for isothermal runs, or held for 2 minutes and then programmed to 270°C at n°/min. In total, 15 gas pulses of 2 s width were introduced in 90 s intervals. Note that only 7 out of 15 pulses are shown. Isobutane was 10 vol. % in helium.

b) GC effluent was connected to the combustion interface after 2 minutes.

c) Average $\delta^{13}$C-values in [‰] ± σ are given as mean of (15-1) values in the case of 1 active reference peak, or of (15-3) values in the case of 3 active reference peaks.

References

[1]D E Matthews and J M Hayes, Anal. Chem. 50, 1465-1473 (1978)

[2]J T Brenna, Acc. Chem. Res., 27, 340-346 (1994) and references cited therein

[3]W A Brand, J Mass Spectrom., 31, 225-235 (1996)

[4]R J Caimi, L H Houghton, and J T Brenna, Anal. Chem., 66, 2989-2991 (1994)

[5]European Patent, application number 88308156.4, publication number 0 306 333, 08.03.1989, Bulletin 89/10

[6]D A Merrit, W A Brand, and J M Hayes, Org. Geochem., 21, 573-583 (1994)

[7]W Meier-Augenstein, P W Watt, and C D Langhans, J Chromatogr, A, (1996) in press

[8]S A Baylis, K Hall, and E J Jumeau, Org. Geochem, 21, 777-785 (1994)

[9]B N Bopp, F J Sansone, T M Rust, and D A Merrit, Anal. Chem., 67, 405-411 (1995)

[10]M Rautenschlein, K Habfast, and W A Brand in Stable Isotopes in Paediatric, Nutritional, and Metabolic Research, Intercept Ltd., Andover (UK), (1990) pp 133-148

[11]K J Goodman and J T Brenna, Anal. Chem., 66, 12941301 (1994)

[12]M Matucha, W Jokisch, P Verner, and G Anders, J Chromatogr., 588, 251-258 (1991)

[13]K J Goodman and J T Brenna, J Chromatogr. A, 698, 63-68 (1995)

[14]H Craig, Geochem. Cosmochim. Acta, 12, 133-149 (1957)

[15]G R van der Hoff, P van Zoonen, and K Grob, J High Resol. Chromatogr., 17, 37-42 (1994)

## Claims

1. A reference gas inlet for use in isotope ratio mass spectrometer systems wherein the reference gas is controllably introduced before the interface and yields a Gaussian shaped peak of the same form as that produced by the sample constituents.

2. A reference gas inlet for an isotope ratio mass spectrometer system comprising three pipes which intersect at an intersection point, wherein secondary flow of carrier gas and reference gas can enter the inlet via separate pipes and can exit the inlet together via the third pipe before the secondary flow enters the combustion interface.

3. A reference gas inlet according to Claim 1 comprising a hollow T piece, two ends of which are suitable in the secondary carrier gas line in a mass spectrometer system, wherein reference gas can be carried into the system before the combustion interface.

4. A reference gas inlet pipe as claimed in any of the preceding claims wherein the pipe can be switched on and off such that the reference gas can be controllably introduced.

5. A reference gas inlet pipe as claimed in any of the preceding claims further comprising a sheathing pipe and an inner pipe moveable within the sheathing pipe towards and away from the intersection of the inlet.

6. A system for internal standardisation comprising an inlet pipe as claimed in any of the preceding claims wherein the reference gas can be introduced into a secondary flow of carrier gas that joins the primary flow of carrier gas transporting a sample containing the elemental analyte before both flows pass into a module that converts the sample into a gaseous form for mass spectrometric analysis.

Fig. 1

FIG. 2

FIG. 3A

Effluent from GC column

Combustion Furnace

He (+ reference gas)
to combustion furnace

EP 1 637 878 A1

Fig. 3B

He →  He (+ ref.) → to T-Piece

Restriction
open to atmos.

Ref. | Gas

_FIG. 4_

He →  to T-Piece

Ref.
Gas I

Ref.
Gas II

_FIG. 5_

FIG. 6

EP 1 637 878 A1

FIG. 8A

EP 1 637 878 A1

FIG. 10

European Patent Office

**EUROPEAN SEARCH REPORT**

Application Number

EP 05 02 6613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 012 052 A (HAYES JOHN M) 30 April 1991 (1991-04-30) * column 6, lines 65-68 * * column 13, lines 10-22 * * column 16, line 57 - column 17, line 12; figure 1 * ----- | 1,4,6 | G01N30/84 H01J49/04 G01N30/72 |
| A,P | WO 96/08719 A (FISONS PLC ;FREEDMAN PHILIP ANTONY (GB); BROCKWELL TIMOTHY GRAHAM) 21 March 1996 (1996-03-21) * page 9, paragraph 2 * * page 11, paragraph 2; figure 1 * ----- | 1 | |
| X | EP 0 419 167 A (VG INSTR GROUP) 27 March 1991 (1991-03-27) * page 8, lines 16-26 * * page 8, line 34 - page 9, line 12; figures 1,2 * ----- | 2,3,6 | |
| A | US 5 432 344 A (BRAND WILLI) 11 July 1995 (1995-07-11) * column 2, lines 25-57 * ----- | 1 | |
| A | US 5 281 397 A (LIGON WOODFIN V ET AL) 25 January 1994 (1994-01-25) * column 8, line 51 - column 9, line 35; figure 3 * ----- | 2 | TECHNICAL FIELDS SEARCHED (IPC) G01N H01J |
| A | US 5 424 539 A (BRAND WILLI ET AL) 13 June 1995 (1995-06-13) * column 1, line 43 - column 2, line 42 * * column 3, line 41 - column 4, line 47; figure 2 * ----- | 2 | |
| X | US 3 641 822 A (RANO J. HARRIS SR ET AL) 15 February 1972 (1972-02-15) * column 1, line 5 * * column 3, lines 28-59; figures 4,5 * ----- | 2 | |

-/--

The present search report has been drawn up for all claims

| Place of search | Date of completion of the search | Examiner |
|---|---|---|
| Munich | 26 January 2006 | Rouault, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 02 6613

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 590 371 A (OTTLEY ET AL) 20 May 1986 (1986-05-20) * column 2, line 16 - column 3, line 25; figures 1,2 * ----- | 2-6 | |
| A | US 5 308 979 A (VILLA-ALEMAN ET AL) 3 May 1994 (1994-05-03) * column 4, line 12 - column 5, line 49; figure 1 * ----- | 2-6 | |

TECHNICAL FIELDS SEARCHED (IPC)

The present search report has been drawn up for all claims

| Place of search | Date of completion of the search | Examiner |
|---|---|---|
| Munich | 26 January 2006 | Rouault, P |

## ANNEX TO THE EUROPEAN SEARCH REPORT
## ON EUROPEAN PATENT APPLICATION NO.

EP 05 02 6613

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2006

| Patent document cited in search report | | Publication date | Patent family member(s) | | Publication date |
|---|---|---|---|---|---|
| US 5012052 | A | 30-04-1991 | EP | 0360862 A1 | 04-04-1990 |
| | | | JP | 2503958 T | 15-11-1990 |
| | | | WO | 8909486 A1 | 05-10-1989 |
| WO 9608719 | A | 21-03-1996 | DE | 69520425 D1 | 26-04-2001 |
| | | | DE | 69520425 T2 | 05-07-2001 |
| | | | EP | 0729577 A1 | 04-09-1996 |
| | | | ES | 2154733 T3 | 16-04-2001 |
| | | | GB | 2297160 A | 24-07-1996 |
| | | | JP | 3482497 B2 | 22-12-2003 |
| | | | JP | 9508474 T | 26-08-1997 |
| | | | US | 5766954 A | 16-06-1998 |
| EP 0419167 | A | 27-03-1991 | CA | 2025729 A1 | 21-03-1991 |
| | | | DE | 69016900 D1 | 23-03-1995 |
| | | | DE | 69016900 T2 | 22-06-1995 |
| | | | JP | 2912697 B2 | 28-06-1999 |
| | | | JP | 3146862 A | 21-06-1991 |
| | | | US | 5314827 A | 24-05-1994 |
| US 5432344 | A | 11-07-1995 | DE | 4332127 A1 | 07-04-1994 |
| | | | GB | 2270977 A | 30-03-1994 |
| US 5281397 | A | 25-01-1994 | NONE | | |
| US 5424539 | A | 13-06-1995 | NONE | | |
| US 3641822 | A | 15-02-1972 | NONE | | |
| US 4590371 | A | 20-05-1986 | AU | 559918 B2 | 26-03-1987 |
| | | | AU | 2924584 A | 13-12-1984 |
| | | | DE | 3469641 D1 | 07-04-1988 |
| | | | EP | 0128716 A2 | 19-12-1984 |
| | | | GB | 2141230 A | 12-12-1984 |
| | | | JP | 60068544 A | 19-04-1985 |
| US 5308979 | A | 03-05-1994 | NONE | | |

EPO FORM P0459

For more details about this annex : see Official Journal of the European Patent Office, No. 12/82